(19) **Europäisches Patentamt / European Patent Office / Office européen des brevets**

(11) **EP 2 485 890 B1**

(12) **EUROPEAN PATENT SPECIFICATION**

(45) Date of publication and mention
of the grant of the patent:
**14.06.2017 Bulletin 2017/24**

(21) Application number: **10819122.2**

(22) Date of filing: **22.09.2010**

(51) Int Cl.:
***B31B 70/64*** (2017.01)

(86) International application number:
**PCT/SE2010/051018**

(87) International publication number:
**WO 2011/037528 (31.03.2011 Gazette 2011/13)**

(54) **DEVICE FOR PRODUCING PACKAGES**

VORRICHTUNG ZUR HERSTELLUNG VON PACKUNGEN

DISPOSITIF DE PRODUCTION D'EMBALLAGES

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **23.09.2009 SE 0901227**

(43) Date of publication of application:
**15.08.2012 Bulletin 2012/33**

(73) Proprietor: **Ecolean AB**
**251 08 Helsingborg (SE)**

(72) Inventors:
• **GUSTAFSSON, Per**
**237 34 Bjärred (SE)**

• **FORSS, Stefan**
**253 73 Gantofta (SE)**

(74) Representative: **Awapatent AB**
**P.O. Box 1066**
**251 10 Helsingborg (SE)**

(56) References cited:
| | |
|---|---|
| **EP-A1- 0 487 788** | **WO-A1-2005/030597** |
| **WO-A1-2005/092601** | **WO-A1-2008/118055** |
| **DE-A1- 3 833 744** | **DE-B- 1 105 336** |
| **GB-A- 886 531** | **SE-C2- 526 329** |
| **US-A- 3 555 779** | |

## Description

Technical field

The present invention relates to a device for producing packages from an M-folded material web and, more specifically, to a device of this kind which comprises a rotatable tool holder having a plurality of peripherally arranged tools which engage with the material web when this is passed over the tools for the connection of mutually facing wall portions of the material web along connecting portions which define or outline said packages.

Background of the invention

It has become increasingly common to pack liquid products, and in this context, above all, liquid foods such as water, milk, juice or wine, in collapsible packages.

By a collapsible package is meant a package which has a chamber delimited by flexible walls, whose volume is dependent on the mutual position of the walls.

This package type can exist, prior to filling, in a flat and sealed state. It is hence possible to sterilize the chamber of the package in connection with production and, with maintained sterility, to distribute the package to a filling plant, such as a dairy.

Packages which are produced from an M-folded material web of flexible plastic film material form, in the filled state, collapsible packages.

It is known to produce rolls consisting of interconnected packages of the above-stated type rolled up on a reel, and to arrange such a roll in a filling machine.

The packages of this type can be produced in an intermittent production process, in which a material web is advanced step by step along a line comprising tools which can be brought into engagement with the material web when this is stationary. Such a production process is described, for example, in WO99/41155. The process allows great latitude in the configuration of the shape of the packages, but the production capacity is relatively low.

The packages can also be produced with the aid of the device described by way of introduction. Such a device is known from WO2005/092601.

The device described in WO 2005/092601 comprises a rotatable tool holder supporting a plurality of peripherally arranged tools, which tools each comprise a base element and an engagement element which is arranged such that it is pivotable relative to the base element. The M-folded material web can be passed over the base elements. Through rotation of the tool holder, the tools are moved along a work path in which the tools can be brought into engagement with the material web by folding of the said engagement element for the connection of mutually facing wall portions of the material web along connecting portions which define the said packages, and along a return path in which the tools can be brought out of engagement with the material web by raising of the said engagement element. Each tool is thus arranged to be moved together with the material web when the tool is moved along the said work path. Continuous high-capacity production of packages is hereby allowed.

It will be appreciated that the tools must be configured with great accuracy in order to procure liquid-tight packages. In many cases, the packages are configured with handle portions, which are intended to be filled with gas in order to procure grip-friendly handles in the finished packages. It will be appreciated that the tools must be configured with great accuracy so that these handle portions are gas-tight. The device thus allows continuous production of packages, but leads to certain limitations with respect to the configuration of the packages, since the tools must be configured such that the connecting portions are liquid-tight and, where appropriate, also gas-tight.

There is therefore a need for a device for producing packages at high capacity and, at the same time, with great latitude with respect to the shaping of the packages.

Summary of the invention

With the above in mind, it is an object of the present invention to provide an improved device for producing packages from an M-folded material web.

A further object of the invention is to provide a device of this kind which allows the high-capacity production of packages of the said type.

It is also an object of the invention to provide a device of this kind which allows great latitude in the shaping of the packages.

Another aspect not forming part of the invention is to provide a filling machine which allows filling and liquid-tight closure of packages produced in such a device.

In order to achieve at least one of the above objects, and also other objects which will be evident from the following description, according to the present invention a device for producing packages from an M-folded material web is indicated, comprising a rotatable tool holder supporting a plurality of peripherally arranged tools. Each tool comprises a base element and an engagement element arranged such that it is pivotable relative to the base element, and the base elements form a circumferential outer surface of the tool holder, over which circumferential outer surface the said material web can be passed. The tool holder is arranged, upon rotation, to move the tools along a work path along which the tools can be brought into engagement with the material web by folding or pivoting of the said engagement elements for the connection of mutually facing wall portions of the material web along connecting portions which outline the said packages, and a return path along which the tools can be brought out of engagement with the material web by raising of the said engagement elements. Each tool is arranged to be moved together with the material web when the tool is moved along the said work path. Each tool, when engaging with the said material web, is arranged to participate in the production of at least two packages, and each pair of adjacent tools are arranged for the joint production of one package.

An improved device for producing collapsible packages from an M-folded material web is hereby procured. That the tool is moved with the material web means that an effective, continuous production of packages with reliable connecting portions is allowed. The fact that each tool participates in the production of at least two packages and that each pair of adjacent tools cooperate for the production of one package makes it possible to procure a web of packages which are interconnected without any intermediate waste material portion, even if packages have advanced shaping. Specifically, it is possible to configure packages having curved front and rear edges, in which a rear edge of one package corresponds to and is integral with a front edge of an adjoining package. The invention thus allows great latitude in the shaping of the package.

According to one embodiment of the present invention, the device is configured to, by means of the said tools, procure connecting portions which outline closed packages. That the packages are closed in the unfilled state means that use of the packages in aseptic filling systems is allowed by sterilization of the packages. The fact that the packages are closed makes it possible to maintain this sterilization until the packages are opened for filling in a sterile room of a filling machine.

According to yet another embodiment of the present invention, the tools alternately support tool profiles of a first and a second type, which first type of tool profiles, when engaging with the material web, is arranged to participate in the production of two adjoining packages, and comprises a first section for procuring a front part of the connecting portion for one package and a second section for procuring a rear part of the connecting portion for the second package, and which second type of tool profiles, when engaging with the material web, is arranged to participate in the production of three adjoining packages, and comprises a first section for procuring a front part of the connecting portion for a first of the said three packages and an intermediate, second section for procuring the entire connecting portion for a second of the said three packages, as well as a third section for procuring a rear part of the connecting portion for the third of the three packages, wherein the first section of a tool having a tool profile of the said first type cooperates with the third section of an adjoining tool having a tool profile of the said second type to procure the entire connecting portion for a package, and wherein the second section of a tool having a tool profile of the said first type cooperates with the first section of an adjoining tool having a tool profile of the said second type to procure the entire connecting portion for a package. An inventive device which allows the production of a web of interconnected packages without intermediate waste material by means of tools which only comprise tool profiles of two types is hereby provided. Each package can comprise a handle portion intended for gas filling, and this embodiment of the inventive device makes it also possible to ensure, by suitable configuration of the package, that that part of the connecting portion which outlines or delimits the said handle portion is procured by a single tool. Each tool can here have a width which relates to a width of the packages which the tool is arranged to produce as follows: B1 = 1.5 * B2.

According to one more embodiment of the present invention, the tools support identical tool profiles, which tool profiles, when engaging with the material web, are each arranged to participate in the production of two adjoining packages, and comprise a first section, for procuring a front part of the connecting portion for a first of the said two packages, and a second section, for procuring a rear part of the connecting portion for a second of the said two packages, wherein the first section of the tool profile of a tool cooperates with the second section of the tool profile of an adjoining tool to procure the entire connecting portion for a package, and wherein the second section of the tool profile of a tool cooperates with the first section of the tool profile of an adjoining tool to procure the entire connecting portion for a package.

An inventive device which allows the production of a web of interconnected packages without intermediate waste material by means of tools which only comprise tool profiles of one type is hereby provided. Each package can comprise a handle portion intended for gas filling, and this embodiment of the inventive device makes it also possible to ensure, by suitable configuration of the package, that that part of the connecting portion which outlines or delimits the said handle portion is procured by a single tool. Each tool can here have a width which relates to a width of the packages which the tool is arranged to produce as follows: B1 = B2.

According to a further embodiment of the invention, the device comprises a bottom sealing member, which is arranged to procure lateral transverse seals in a lower part of the connecting portion of each package. It is hereby ensured that a package whose connecting portion has been produced jointly by two adjacent tools acquires a liquid-tight bottom portion even if the package has been produced from a material web having an incorrect M-fold.

According to a further embodiment of the present invention, the device comprises a top closure member which is arranged to procure a top closure in an upper part of the connecting portion of each package. It is hence possible to procure a package which in the unfilled state is closed and gas-tight, even if the connecting portion of the package has been produced jointly by two adjacent tools. The top closure member can here be arranged to procure top closures having a width which relates to a width of the packages which the device is arranged to produce as follows: B4 > 0.5 * B2.

Also described is a filling machine for filling packages produced in a device according to the above, comprising a closure member which is arranged to, after filling, close off a filling channel of each package by the procurement of an upper, centred closure having a width which relates to a width of the package as follows: B3 > 0.5 * B2.

Brief description of the drawings

Embodiments of the present invention will now be described below for illustrative purposes with reference to the accompanying drawings.

Fig. 1 shows a schematic perspective view of an inventive device for producing collapsible packages.

Fig. 2 shows a schematic plan view of tools for a first embodiment of the inventive device.

Fig. 3 shows a schematic plan view of a web of interconnected packages which have been produced with the tools shown in Fig. 2.

Fig. 4 shows a schematic plan view of tools for a second embodiment of the inventive device.

Fig. 5 shows a schematic plan view of a web of interconnected packages which have been produced with the tools shown in Fig. 4.

Figs. 6a-b show the process for producing a package from a material web having a correct M-fold by means of a tool of the inventive device.

Figs. 7a-b show the process for producing a package from a material web having an incorrect M-fold by means of a tool of the inventive device.

Fig. 8 shows a schematic perspective view of a package which has been produced from a material web having an incorrect M-fold.

Fig. 9 shows a schematic plan view of a package which has been produced in an inventive device and which has been provided with lateral transverse seals.

Figs. 10a-c show schematically the process for opening, filling and sealing of a package which has been produced in an inventive device.

Fig. 11 shows a schematic plan view of a package which has been produced in an inventive device and which has been provided with a top closure.

Description of illustrative embodiments

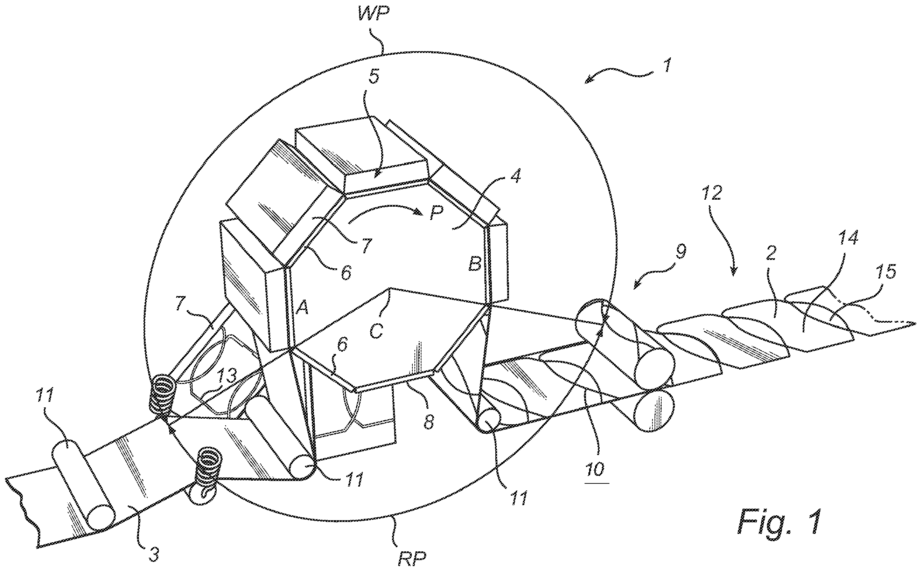

In Figure 1, to which reference is made, an inventive device 1 for producing packages 2 from an M-folded material web 3 is illustrated. A package 2 produced from such a material web 3 will acquire two side walls from the outer side portions of the web 3 and a bottom wall from the folded middle portion of the web 3.

The material web 3 from which the said packages 2 are produced is advantageously constituted by a flexible multilayered packaging material. The packaging material can comprise, for example, a core layer, a gas-barrier layer and a light-barrier layer. The light-barrier layer can be integrated in the core layer or the gas-barrier layer. The core layer can comprise filler made of mineral material and binder made of a polyolefin material. Alternatively, the core layer can be produced from a non-woven polyolefin material.

The device 1 comprises a rotatably arranged tool holder 4, which supports a plurality of peripherally arranged tools 5. In the shown embodiment, the tool holder 4 has an octagonal structure in which a tool 5 is arranged along each side of the structure, i.e. the tool holder 4 supports eight tools 5.

By rotation of the tool holder 4, the tools 5 can be moved along a path comprising a work path WP and a return path RP.

Each tool 5 comprises a base element 6 and an engagement element 7. Each base element 6 is fixedly mounted in the tool holder 4 and they together form a circumferential and continuous outer surface 8 of the tool holder 4. The surface facing outwards of the base element 6 of each tool forms in the shown embodiment a planar section of the continuous outer surface 8 of the tool holder 4. In the shown embodiment, the outer surface 8 comprises eight planar sections, but it is realized that the outer surface may comprise more or fewer such planar sections.

The engagement elements 7 are arranged such that they can be pivoted in relation to the respective base element 6. When an engagement element 7 is raised, the base element 6 and thus a part of the outer surface 8 of the tool holder 4 are exposed to the environment. For closing of the tool 5, the engagement element 7 is pivoted or folded to abutment against the base element 6.

The device 1 also comprises a control member (not shown in Fig. 1) for opening and closing of the tools 5. More specifically, the control member is arranged to close the tools 5 when these are moved along the said work path WP and to open the tools 5 when these are moved along the said return path RP. The control member can comprise a cam arrangement, which, via a link mechanism arranged for each tool 5, controls the opening and closing of the tool 5.

During operation of the device 1, the M-folded material web 3 is passed over the base elements 6 of the tools 5 situated along the said work path WP. According to the shown embodiment, the material web 3 is subsequently led onward to a subsequent station in the form of a punching station 9.

The tool holder 4 thus acts as a deflection member for the material web 3.

During operation the tool holder 4 is rotated, and hereupon moves the tools 5 along the said work path WP, along which the tools 5 can be brought into engagement with the material web 3 by pivoting or folding of the said engagement elements 7 for the connection of mutually facing wall portions of the material web 3 along connecting portions 10 which outline or define the said packages 2, and along the said return path RP, along which the tools 5 can be brought out of engagement with the material web 3 by raising of the said engagement elements 7. Each tool 5 is consequently arranged to be moved together with the material web 3 when the tool 5 is moved along the said work path WP.

More specifically, the material web 3, after having been led in towards the tool holder 4 via diverse deflecting rollers 11, initially reaches the start of the work path WP, which start is indicated at position A, whereupon the tool 5 located at the said position A is closed by the control member, which thus procures a folding or lowering of the pivotable engagement element 7.

The tool 5 will hereby engage with the material web 3, which engagement is maintained upon rotation of the tool holder 4 in the direction specified by the arrow P for movement of the tool 5 to the end of the work path WP, which end is indicated at position B.

During the movement of the tool from position A to position B, the tool 5 will thus be moved together with the material web 3 and will hereupon engage with the material web 3 for the connection of mutually facing wall portions along the said connecting portion 10.

At the same time, subsequent tools 5 will engage along the work path WP with subsequent portions of the material web 3 for the connection of mutually facing wall portions along connecting portions 10 in the same way.

At position B, the control member is arranged for opening of the tool 5.

By continued rotation of the tool holder 4 in the direction of the arrow P, the tool 5 will be moved along the said return path RP back to the start of the work path WP, position A, where the tool 5 is once again ready to engage with the material web 3.

The material web 3 is advantageously produced from a multilayered material having an inside-forming surface layer having a melting point which is lower than the melting point for an outer-side-forming surface layer of the material. Through a suitable choice of sealing temperature and time, this allows packages 2 to be produced from an M-folded material web 3, without risk of mutually facing outer sides of the package 2 sticking together.

The inventive device 1 is thus arranged for the production of packages 2 by means of tools 5 which are kept substantially stationary in relation to the material web 3. It is thus possible to make the inventive device 1 act as a deflection member for a continuously advanced material web 3, which, for obvious reasons, enables a high production capacity in that it is possible to avoid intermittent operation. It is conceivable, however, to arrange the tool holder 4 such that this is rotated with an indexing motion instead of being rotated continuously.

Downstream of the tool holder 4 there is arranged, as previously mentioned, a punching station 9 for punching out the finished packages 2 from the material web 3 along the said connecting portions 10. In the shown embodiment, the said punching station 9 comprises a rolling press, which is arranged to punch out in such a way that two successive packages 2 are interconnected without any intermediate waste material to form a continuous web 12 of packages 2. This web 12 of packages 2 can then be rolled up to be supplied in roll form to a filling machine.

In order to procure a necessary strength of the connecting portions 10, it is important that the sealing time is sufficiently long. This means that, at a given sealing temperature, each tool 5 must maintain its engagement with the material web 3 for a prescribed time period, which according to a non limiting example may be 1-2 sec.

The inventive device 1 allows packages 2 to be produced at a relatively high production capacity and with reliable connecting portions.

The high production capacity stems from the fact that the device 1 allows continuous operation. More specifically, the tools 5 are moved by rotation of the work holder 4, and by placing the tools 5 at a suitable distance from a centre of rotation C of the tool holder 4, it is possible at a given rotation speed to adjust the speed at which the tools 5 are moved to the desired feed rate of the material web 3.

Despite the said high production rate, the production of packages 2 with reliable connecting portions 10 is nevertheless allowed, which means that the packages 2 are liquid-tight in the filled state. The fact that the tool holder 4 of the device 1 acts as a deflection member for the material web 3 enables necessarily long sealing times to be actually achieved. At a given sealing temperature, the sealing time is a function of speed and distance. The said distance is essentially constituted by the extent of the said work path WP, which is dependent firstly on how great a part of the rotation turn of the tool holder 4 is arranged as the work path WP, and secondly on the distance of the tools 5 from the centre of rotation C of the tool holder. In the device 1 shown in Figure 1, the work path WP corresponds approximately to half the rotation turn of the tool holder 4. The said speed is a function of the said distance to the centre of rotation C and of the rotation speed of the tool holder 4. By adjusting the variables: rotation speed of the tool holder 4, distance of the tools 5 to the centre of rotation C and extent of the work path WP, it is thus possible to achieve the necessary sealing time.

For reasons of clarity, the tool holder 4 illustrated in Figure 1 has been given the shape of an octagonal structure. It will be appreciated, however, that the tool holder 4 can also be given other configurations.

The tools 5 are arranged such that each tool 5, when engaging with the material web 3, participates in the production of at least two packages 2. In addition, each pair of adjoining tools 2, when engaging with the said material web 3, are arranged for the joint production of one package 2.

As has been stated above, the tools 5 engage with the material web 3 for the connection of mutually facing wall portions of the material web 3 along connecting portions 10 which outline the said packages 2. For this purpose, the tools comprise tool profiles 13 having an extent corresponding to the said connecting portions 10. These tool profiles 13 can be arranged on the base element 6, on the engagement element 7 or on both the base element 6 and the engagement element 7. The tool profiles 13 can be arranged for heat sealing, i.e. can be arranged to engage with the material web 3 in order to procure, under the influence of pressure and heat, the said connecting portions 10.

Each tool 5 thus comprises a base element 6 and a pivotalbe engagement element 7, in which one of the base element 6 and the engagement element 7 can support the said tool profile 13 and in which the other of the said base element 6 and engagement element 7 can act as a back-pressure structure when the tool profile 13 engages with the material web 3 in the closing of the tool 5. It will be appreciated, however, that both the base element 6 and the engagement element 7 can be provided with tool profiles 13 which are complementary and which are placed one against the other in the closing of the tool 5.

The tools 5 can be made of a metallic material, such as stainless steel. This means that the tool profiles 13 may work against a hard back-pressure structure, which in the shown embodiment is formed by the said base element 6. As stated previously, the base elements 6 form a circumferential outer surface 8 of the tool holder 4, over which outer surface 8 the material web 3 can be passed.

The tool profiles 13 can have a configuration such that, for a flexible multilayered M-folded packaging material, they procure connecting portions 10 which, apart from a product portion 14 intended for liquid filling, or a chamber of the package 2, also outline or delimit a handle portion 15 intended for gas filling.

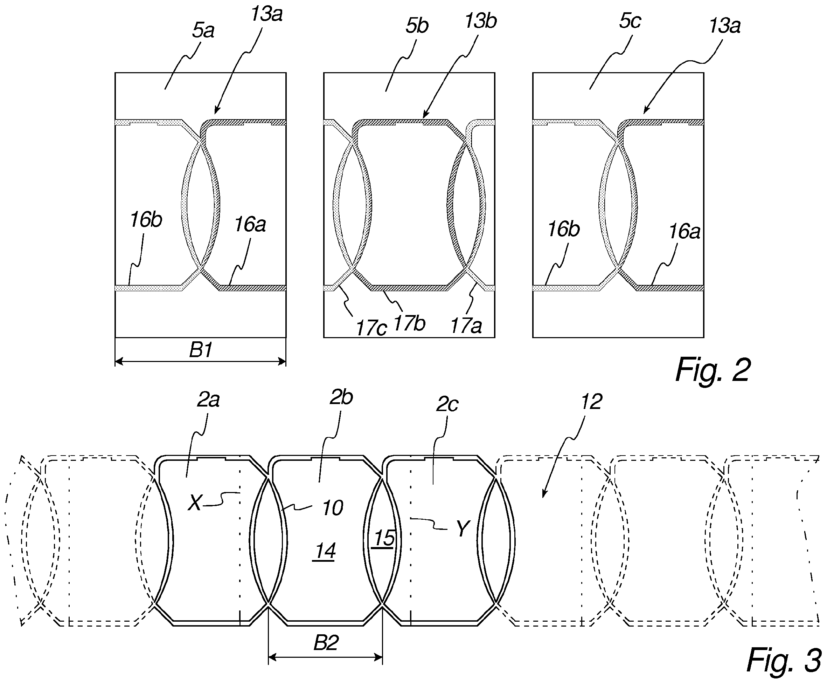

In Fig. 2, to which reference is now made, those tool profiles of the tools which belong to a first embodiment of the inventive device 1 are illustrated. In Fig. 3, to which reference is also made, three packages 2a, 2b, 2c of a web 12 of interconnected packages produced in an inventive device 1 provided with tools of the type shown in Fig. 2 are illustrated. The tool profiles are intended for the production of flexible collapsible packages having a product portion 14 intended for liquid filling and a handle portion 15 intended for gas filling.

The tool profiles are of a first type 13a and a second type 13b. The tools of the inventive device 1 support alternating tool profiles of the said first 13a and second type 13b. In Fig. 2, this is illustrated by means of a first 5a and a second 5c tool having a tool profile of the said first type 13a, and a third tool 5b, arranged therebetween, having a tool profile of the said second type 13b.

The tool profile of the said first type 13a, when engaging with the material web 3, is arranged such that it participates in the production of two successive packages. More specifically, the tool profile 13a has a first section 16a (marked in dark grey) and a second section 16b (marked in light grey), which sections 16a, 16b are mutually adjoining. The first section 16a is arranged to procure a front part of the connecting portion 10 of a package, and the second section 16b is arranged to procure a rear part of the connecting portion 10 of a package.

The tool profile of the said second type 13b, when engaging with the material web 3, is arranged such that it participates in the production of three successive packages. More precisely, the tool profile 13b has three adjoining sections 17a, 17b, 17c. A first section 17a (marked in light grey) is arranged to procure a front part of the connecting portion 10 of a package. A second section 17b, which adjoins the first section 17a and which is marked in dark grey, is arranged for procuring the entire connecting portion 10 of a package. Finally, a third section 17c, which adjoins the second section 17b and which is marked in light grey, is arranged to procure a rear part of the connecting portion 10 of a package.

Adjacent tools have adjoining tool profiles of the said first 13a and second type 13b, which are arranged for joint production of a package.

Use of the tools 5a, 5b, 5c to produce the packages 2a, 2b, 2c of the web 12 of mutually connected packages will be described below.

The first section 16a of the tool profile 13a of the tool 5a will cooperate with the third section 17c of the tool profile 13b of the tool 5b to procure the connecting portion 10 which outlines or delimits the package 2a.

The second section 17b of the tool profile 13b of the tool 5b procures the entire connecting portion 10 which delimits the package 2b.

The first section 17a of the tool profile 13b of the tool 5b cooperates with the second section 16b of the tool profile 13a of the tool 5c to procure the connecting portion 10 which delimits the package 2c.

The joint which is formed in a package when two adjoining tools cooperate for joint production of the package is illustrated in Fig. 3 by means of dotted lines. The position for the joint which is formed when the tools 5a and 5b cooperate for production of a package 2a is marked at X, and the position for the joint which is formed when the tools 5b and 5c cooperate for production of a package 2c is marked at Y.

According to this first embodiment of the inventive device, the width B1 of the tool relates to the width B2 of a package as follows:

$$B1 = 1.5 * B2.$$

The tools of this first embodiment of the inventive device consequently allow the production of a web 12 of interconnected packages without intermediate waste material. Should two tools cooperate in the production of a package, a joint is procured. Depending on which pair of tools procure the joint, the joint ends up in position X or Y. By suitable configuration of the tool profiles, it is possible to ensure that the joint, regardless of whether it ends up in position X or Y, is arranged at a distance from the handle portion intended for gas filling, whereby its gas tightness is ensured.

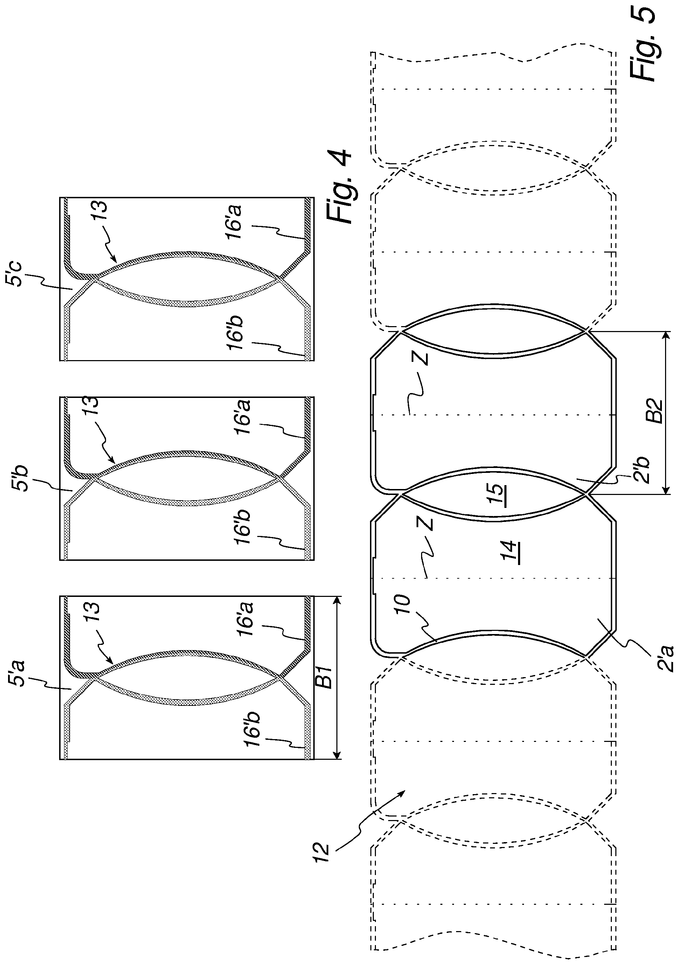

In Fig. 4, to which reference is now made, those tool profiles of the tools which belong to a second embodiment of the inventive device 1 are illustrated. In Fig. 5, to which reference is now also made, two packages 2'a, 2'b of a web 12 of interconnected packages produced in an inventive device 1 provided with tools of the type shown in Fig. 4 are illustrated. The tool profiles are intended for the production of flexible collapsible packages having a product portion 14 intended for liquid filling and a handle portion 15 intended for gas filling.

In this embodiment, the tools support identical tool profiles 13. In Fig. 5, three successive tools 5'a, 5'b, 5'c, each supporting a respective tool profile 13, are illustrated.

Each tool profile 13 is arranged such that, when engaging with the material web, it participates in the production of two successive packages. More precisely, the tool profile 13 has two adjoining sections 16'a, 16'b. A first section 16'a (marked in dark grey) is arranged to procure a front part of the connecting portion 10 of a package, and a second section 16'b (marked in light grey) is arranged to procure a rear part of the connecting portion 10 of a package.

Adjacent tools have adjoining tool profiles 13, which are arranged for the joint production of one package.

Use of the tools 5'a, 5'b, 5'c to produce the packages 2'a, 2'b of the web 12 of mutually connected packages will be described below.

The first section 16'a of the tool profile 13 of the tool 5'a will cooperate with the second section 16'b of the tool profile 13 of the tool 5'b to procure the connecting portion 10 which outlines or delimits the package 2'a.

The first section 16'a of the tool profile 13 of the tool 5'b cooperates with the second section 16'b of the tool profile 13 of the tool 5'c to procure the connecting portion 10 which delimits the package 2'b.

The joint which is formed in a package when two adjoining tools cooperate for the joint production of the package is illustrated in Fig. 5 by means of dotted lines. The position for the joint which is formed when an adjoining pair of tools cooperate for the production of a package is marked at Z.

According to this second embodiment of the said inventive device, the width B1 of the tool relates to the width B2 of a package as follows:

$$B1 = B2.$$

The tools of this second embodiment of the inventive device consequently allow the production of a web of interconnected packages without intermediate waste material. When two tools cooperate in the production of a package, a joint is procured. Regardless of which pair of tools procure the joint, the joint ends up in position Z.

By virtue of the fact that the inventive device comprises tools in which adjoining tools cooperate for the joint production of a package, it is thus possible to configure the tools such that the packages can form a web of interconnected packages without the presence of waste material between mutually adjoining packages. In particular, this is also enabled when the packages have curved front and rear edges, such as in the embodiments shown above. Thus a rear edge of a package can be given the same shape as and sit together with a front edge of an adjoining package. This affords a high degree of scope in the shaping of the package, while the quantity of unused waste material in the material web is minimized.

The web of interconnected packages can be supplied in roll form to a filling machine, in which the web is unrolled and the individual packages are detached by means of a suitably configured cutting member.

The joint which is formed in a package when this is produced jointly by two adjoining tools does not normally pose any problems. That the package is produced from an M-folded material means that the joint cannot normally give rise to any bottom leakage of the filled package.

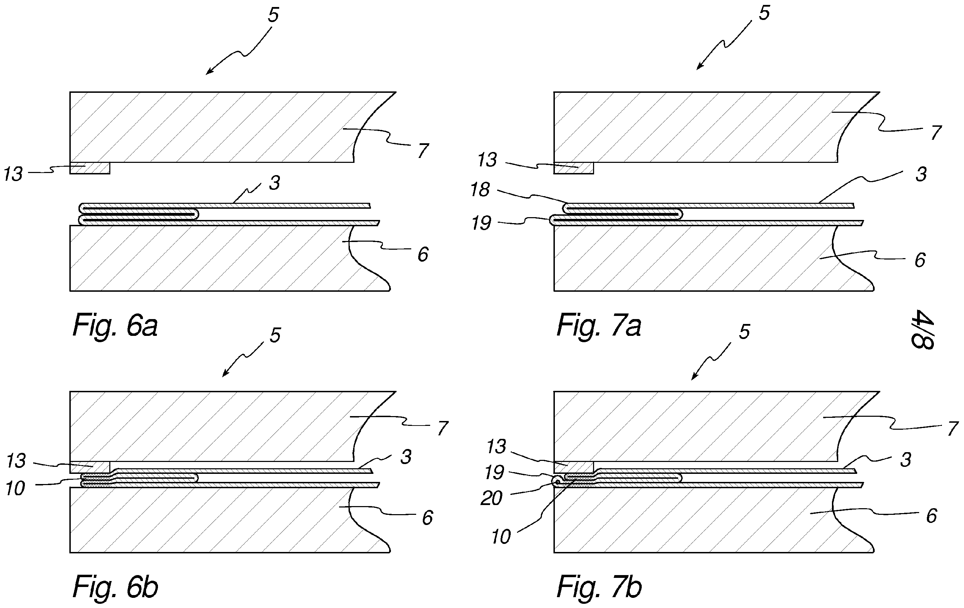

In Figs. 6a and 6b, to which reference is now made, part of a tool 5 for an inventive device 1 is illustrated. The tool 5 comprises a base element 6 and an engagement element 7 supporting a tool profile 13. More specifically, in Fig. 6a it is shown how a material web 3 with correct M-fold has been applied to the base element 6, and in Fig. 6b the engagement element 7 has been folded such that the tool profile 13 engages with the material web 3 to procure, under the influence of heat and pressure, a connecting portion 10. Since the material web 3 has a correct M-fold, the connecting portion 10 is also correct.

In Figs. 7a and 7b, the same tool 5 as in Figs. 6a, b is illustrated, but in Figs. 7a, b a material web 3 having an incorrect M-fold has been applied to the base element. By an incorrect M-fold is meant that the folds 18, 19 which form the said M-fold have a mutual displacement, as can be seen from the figure. From Fig. 7b, it can be seen how a channel 20 is formed in one fold 19 of the M-fold when the tool profile 13 of the engagement element 7 is brought into contact against the material web 3 to procure the said connecting portion 10.

A channel 20 which has been procured in this way, in combination with a joint of a package, which joint was formed when two adjoining tools 5 cooperated in the production of the package, has been identified according to the present invention as a potential leakage risk.

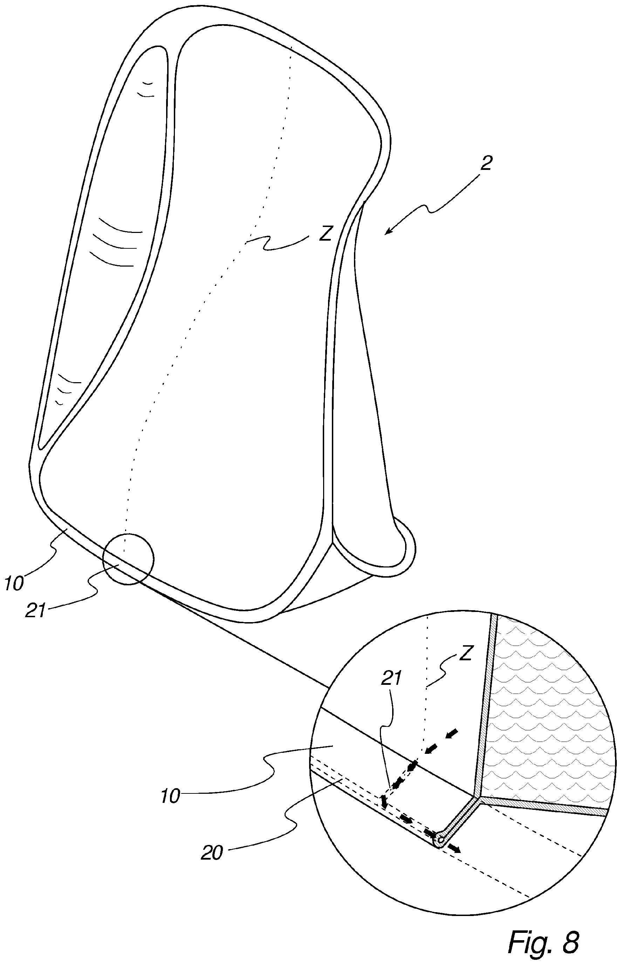

In Fig. 8, to which reference is now made, the said leakage risk is illustrated in greater detail for a filled package 2. In the detached, partially sectioned part-enlargement in Fig. 8, it is shown how a joint, which is shown in position Z, formed by two adjacent tools, can give rise to a passage 21 in the lower part of the connecting portion 10. The passage 21 connects to a channel 20 formed as a result of an incorrect M-fold, as has been described above.

The passage 21 and the channel 20 connecting thereto pose a leakage risk, which is illustrated by means of arrows showing how liquid in the filled package 2 penetrates into the passage 21 and onward into the channel 20, from which the liquid can escape from the package 2.

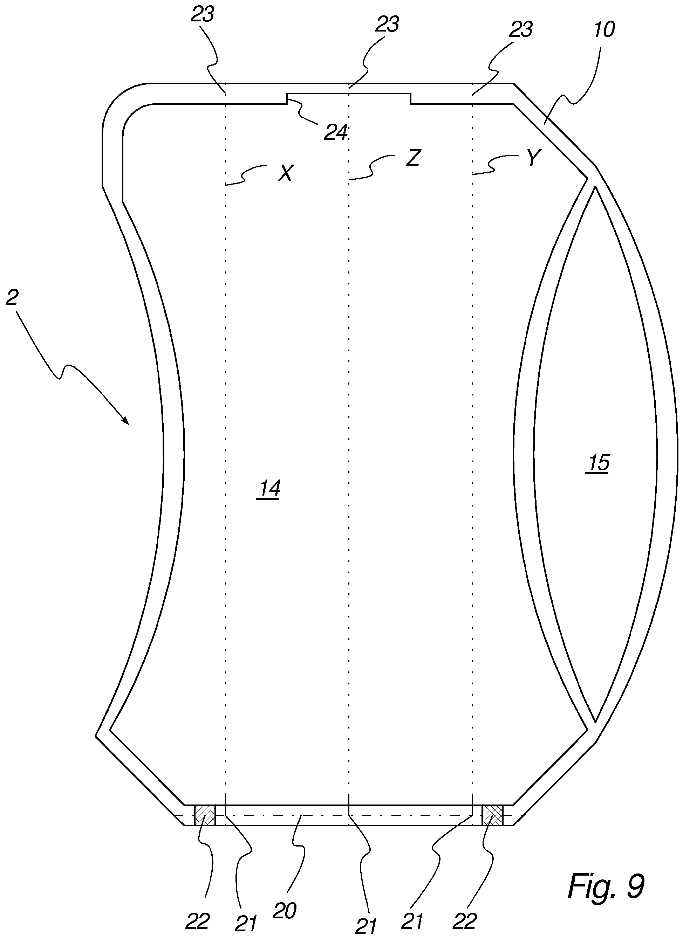

According to one embodiment of the present invention, this leakage risk can be forestalled by means of lateral transverse seals 22 in the lower part of the connecting portion, as is shown in Fig. 9. The transverse seals 22 are arranged laterally on either side of a joint, regardless of position X, Y or Z. The transverse seals 22 block a possible channel 20 and thus eliminate the risk of leakage through such a channel 20. The inventive device 1 can consequently comprise a bottom sealing member (not shown), which is arranged to engage with the material web 3 for procurement of the said lateral transverse seals 22. The bottom sealing member can be integrated in the said tool 5 or arranged separately thereto. It is hereby ensured that the lower part of the connecting portions 10 of the packages 2 are liquid-tight.

The joint which is formed when two adjacent tools cooperate in the production of a package can further result in the formation of a passage 23 in the upper part of the connecting portion 10, via which passage 23 the product portion 14 of the package 23 is connected to the environment.

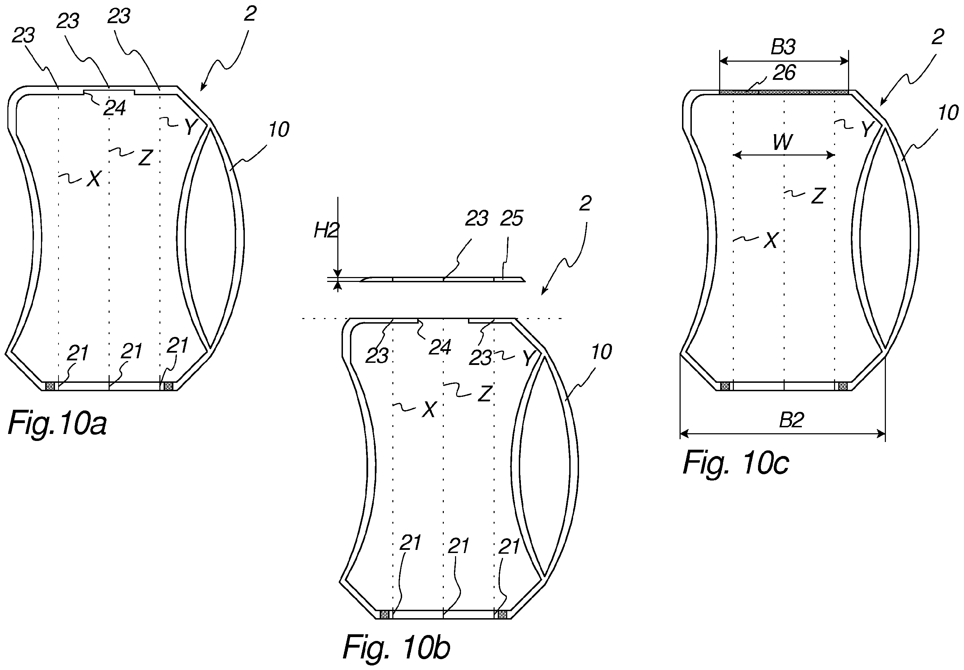

Such a passage 23 does not need to give rise to any risk of leakage of the filled package 2, since the passage 23 can be closed off in connection with the closure of a filling channel 24 of the package 2 following completed filling, which will be described below with reference to Figs. 10a-c.

In the figures are marked three possible positions X, Y, Z for a joint which is formed when two tools 5 of one of the above-described embodiments of the inventive device 1 cooperate for the production of packages 2. The position X, Y or Z of the joint is dependent on what sort of tool 5 has been used and what combination of tool profiles 13 has cooperated to produce the particular package 2, as has been described earlier.

In Fig. 10a, the package 2 is shown in an unfilled and closed state, by which is meant that the filling channel 24 of the package 2 is sealed or closed off. For filling of the package 2, an end closure 25 must be removed, which is illustrated in Fig. 10b, whereafter filling is allowed through the said filling channel 24. Following completion of the filling, the filling channel 24 is sealed or closed off again, as shown in Fig. 10c.

Should the joint be situated in position Z, the passage 23 which is formed in the upper part of the connecting portion 10 will be removed in connection with the removal of the end closure 25.

Should the joint be situated in position X or Y, part of the passage 23 will remain in the upper part of the connecting portion 10 even after the removal of the end closure 25, as can be seen from Fig. 10b. In order to ensure that the filled package 2 is liquid-tight, the filling machine which is used to fill the packages 2 can for this reason be equipped with a closure member for sealing or closing off the filling channel 24, which closure member is arranged to procure a closure 26 having a width B3 which exceeds the distance W between position X and Y. The closure 26 blocks the passage 23, regardless of position X or Y. In Fig. 10c is shown a closure 26 of the filling channel 24 which has been procured by means of such a closure member. The closure member can be arranged, for example, for heat sealing or ultrasonic sealing. It is hereby ensured that the upper part of the connecting portion 10 of the package 2 is liquid-tight after filling.

The closure 26 can be centred and its width B3 can relate to the width B2 of the package as follows:

$$B3 > 0.5 * B2$$

In certain cases the unfilled package 2 is intended for aseptic filling systems, and the package 2 can here be sterilized in the production process so as to be distributed with maintained sterility to a plant, such as a dairy, for filling. For obvious reasons, it is here important that the product portion 14 of the package 2 is not exposed to the environment, and the previously described lateral transverse seals 22 in the lower part of the connecting portion 10 ensure that the product portion 14 is not exposed to the environment via a channel 20 in the said lower part of the connecting portion 10 should the package 20 have been produced from a material web 3 having an incorrect M-fold.

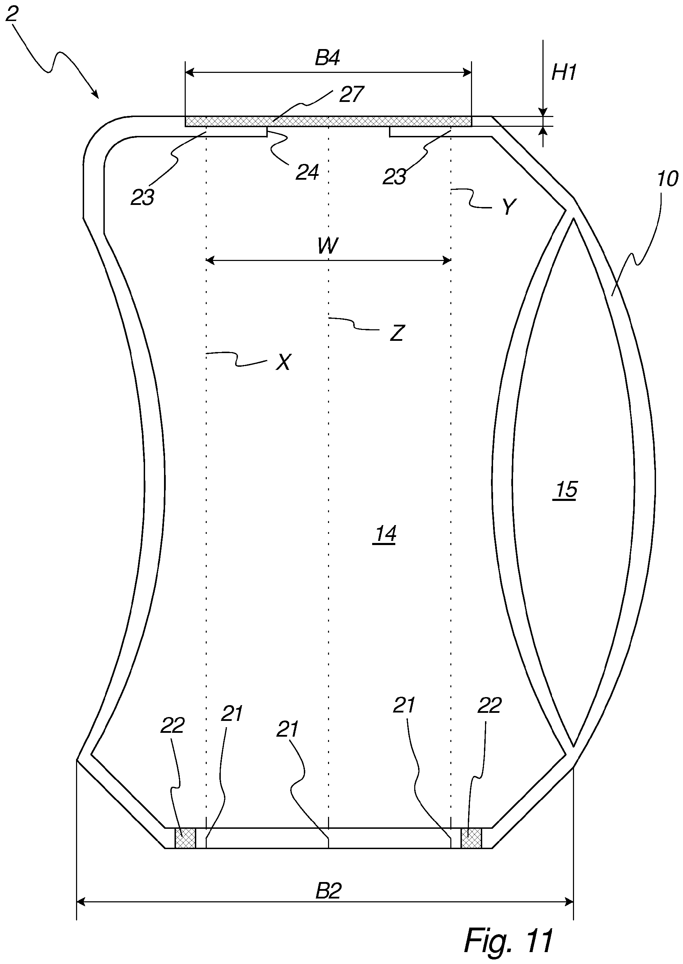

The package 2 can further be provided with an upper complementary top closure 27, as shown in Fig. 11. This top closure 27 has a height H1 corresponding to the height H2 of the end closure, which height H2 can be seen from Fig. 10b, and has a width B4 which exceeds the distance W between position X and Y. The passage 23 is hereby blocked, regardless of position X or Y, in the upper part of the connecting portion 10, and it is hereby ensured that the product portion 14 of the package 2 is not exposed to the environment via the said passage 23. This produces a package 2 which, in the unfilled state, can have a closed, gas-tight product portion 14. The product portion 14 can thus be sterilized in connection with the production of the package 2 and thereafter distributed with maintained sterility to a plant for filling of the package 2.

The top closure 27 can be centred and its width B4 can relate to the width B2 of the package 2 as follows:

$$B4 > 0.5 * B2.$$

As has been described above, the inventive device 1 can be arranged for the production of packages 2 having handle portions 15 intended for gas filling. For obvious reasons, it is important that the handle portions 15 are gas-tight, and according to one embodiment of the inventive device 1 its tools are arranged such that that part of each connecting portion 10 which outlines or delimits a handle portion 15 is procured by a single tool, i.e. not in cooperation with an adjoining tool.

It will be appreciated that the present invention is not limited to the shown embodiments.

For example, the tools and their tool profiles can be configured differently.

It will also be appreciated that the tools can be detachably arranged on the inventive device, so that changing of tools is easily allowed. Through a change of tools, the inventive device can thus be used to produce packages which differ in terms of shaping and/or volume.

A number of modifications and variations are thus conceivable, so that the present invention is exclusively defined by the accompanying claims.

**Claims**

1. Device for producing packages (2; 2a, 2b, 2c; 2'a, 2'b) from an M-folded material web (3), comprising a rotatable tool holder (4) supporting a plurality of peripherally arranged tools (5; 5a, 5b, 5c; 5'a, 5'b, 5'c),

   which tools (5; 5a, 5b, 5c; 5'a, 5'b, 5'c) each comprise a base element (6) and an engagement element (7) which is arranged such that it is pivotable relative to this base element, and

   which base elements (6) form a circumferential outer surface (8) of the tool holder (4), over which circumferential outer surface (8) the said material web (3) can be passed,

   wherein the tool holder (4) is arranged, upon rotation, to move the tools (5; 5a, 5b, 5c; 5'a, 5'b, 5'c) along a work path (WP) along which the tools (5; 5a, 5b, 5c; 5'a, 5'b, 5'c) can be brought into engagement with the material web (3) by folding of the said engagement element (7) for the connection of mutually facing wall portions of the material web (3) along connecting portions (10) which outline the said packages (2; 2a, 2b, 2c; 2'a, 2'b), and a return path (RP) along which the tools (5; 5a, 5b, 5c; 5'a, 5'b, 5'c) can be brought out of engagement with the material web (3) by raising of the said engagement element (7), and

   wherein each tool (5; 5a, 5b, 5c; 5'a, 5'b, 5'c) is arranged to be moved together with the material web (3) when the tool (5; 5a, 5b, 5c; 5'a, 5'b, 5'c) is moved along the said work path (WP), **characterized in that**

   each tool (5; 5a, 5b, 5c; 5'a, 5'b, 5'c), when engaging with the said material web (3), is arranged to participate in the production of at least two packages (2; 2a, 2b, 2c; 2'a, 2'b),

   wherein each pair of adjacent tools (5; 5a, 5b, 5c; 5'a, 5'b, 5'c) are arranged for the joint production of one package (2; 2a, 2b, 2c; 2'a, 2'b).

2. Device according to Claim 1, in which the said tools (5; 5a, 5b, 5c; 5'a, 5'b, 5'c) are arranged to procure connecting portions (10) which outline closed packages (2).

3. Device according to any one of the preceding claims, in which the tools (5a, 5b, 5c) alternately support tool profiles (13) of a first (13a) and a second type (13b), which first type (13a) of tool profiles (13), when engaging with the material web (3), is arranged to participate in the production of two adjoining packages (2), and comprises a first section (16a) for procuring a front part of the connecting portion (10) for one package (2) and a second section (16b) for procuring a rear part of the connecting portion (10) for the second package (2), and which second type (13b) of tool profiles (13), when engaging with the material web (3), is arranged to participate in the production of three adjoining packages (2), and comprises a first section (17a) for procuring a front part of the connecting portion (10) for a first of the said three packages (2) and an intermediate, second section (17b) for procuring the entire connecting portion (10) for a second of the said three packages (2), as well as a third section (17c) for procuring a rear part of the connecting portion (10) for the third of the three packages (2), wherein the first section (16a) of a tool (5a) having a tool profile (13) of the said first type (13a) cooperates with the third section (17c) of an adjoining tool (5b) having a tool profile (13) of the said second type (13b) to procure the entire connecting portion (10) for a package (2a), and wherein the second section (16b) of a tool (5c) having a tool profile (13) of the said first type (13a) cooperates with the first section (17a) of an adjoining tool (5b) having a tool profile (13) of the said second type (13b) to procure the entire connecting portion (10) for a package (2c).

4. Device according to Claim 3, in which each tool (5a, 5b, 5c) has a width B1 which relates to a width B2 of the packages (2) which the tool (5) is arranged to produce as follows: B1 = 1.5 * B2.

5. Device according to Claim 1 or 2, in which the tools (5'a, 5'b, 5'c) support identical tool profiles (13), which tool profiles (13), when engaging with the material web, are each arranged to participate in the production of two adjoining packages (2), and comprise a first section (16'a), for procuring a front part of the connecting portion (10) for a first of the said two packages (2), and a second section (16'b), for procuring a rear part of the connecting portion (10) for a second of the said two packages (2), wherein the first section (16'a) of the tool profile (13) of a tool (5'a) cooperates with the second section (16'b) of the tool profile (13) of an adjoining tool (5'b) to procure the entire connecting portion (10) for a package (2'a), and wherein the second section (16'b) of the tool profile (13) of a tool (5'c) cooperates with the first section (16'a) of the tool profile of an adjoining tool (5'b) to procure the entire connecting portion (10) for a package (2'b).

6. Device according to Claim 5, in which each tool (5'a, 5'b, 5'c) has a width B1 which relates to a width B2 of the packages (2) which the tool is arranged to produce as follows: B1 = B2.

7. Device according to any one of the preceding claims, further comprising a bottom sealing member, which is arranged to procure lateral transverse seals (22) in a lower part of the connecting portion (10) of each package (2).

8. Device according to any one of the preceding claims, further comprising a top closure member which is arranged to procure a complementary top closure (27) in an upper part of the connecting portion (10) of each package (2).

9. Device according to Claim 8, in which the top closure member can here be arranged to procure top closures having a width B4 which relates to a width B2 of the packages (2) which the device is arranged to produce as follows: B4 > 0.5 * B2.

**Patentansprüche**

1. Vorrichtung zur Herstellung von Packungen (2; 2a, 2b, 2c; 2'a, 2'b) aus einer M-gefalteten Materialbahn (3), die Folgendes umfasst einen drehbaren Werkzeughalter (4), der mehrere umfangsseitig angeordnete Werkzeuge (5; 5a, 5b, 5c; 5'a, 5'b, 5'c) stützt, wobei die Werkzeuge (5; 5a, 5b, 5c; 5'a, 5'b, 5'c) jeweils ein Basiselement (6) und ein Ineingriffnahmeelement (7), das so angeordnet ist, dass es in Bezug auf das Basiselement schwenkbar ist, umfassen, und wobei die Basiselemente (6) eine umlaufende Außenfläche (8) des Werkzeughalters (4) bilden, wobei die Materialbahn (3) über die umlaufende Außenfläche (8) hinweggeführt werden kann, wobei der Werkzeughalter (4) dazu ausgelegt ist, bei seiner Drehung die Werkzeuge (5; 5a, 5b, 5c; 5'a, 5'b, 5'c) entlang eines Arbeitspfads (work path - WP), entlang dessen die Werkzeuge (5; 5a, 5b, 5c; 5'a, 5'b, 5'c) mit der Materialbahn (3) in Eingriff gebracht werden können, indem das Ineingriffnahmeelement (7) zum Verbinden der sich jeweils gegenüberliegenden Wandabschnitte der Materialbahn (3) entlang von Verbindungsabschnitten (10) gefaltet wird, die den Umriss der Packungen (2; 2a, 2b, 2c; 2'a, 2'b) bilden, und entlang eines Rückkehrpfads (return path - RP), entlang dessen die Werkzeuge (5; 5a, 5b, 5c; 5'a, 5'b, 5'c) außer Eingriff mit der Materialbahn (3) gebracht werden können, indem das Ineingriffnahmeelement (7) angehoben wird, zu bewegen, und wobei jedes Werkzeug (5; 5a, 5b, 5c; 5'a, 5'b, 5'c) dazu ausgelegt ist, zusammen mit der Materialbahn (3) bewegt zu werden, wenn das Werkzeug (5; 5a, 5b, 5c; 5'a, 5'b, 5'c) entlang des Arbeitspfads (WP) bewegt wird, **dadurch gekennzeichnet, dass** jedes Werkzeug (5; 5a, 5b, 5c; 5'a, 5'b, 5'c) bei Ineingriffnahme der Materialbahn (3) dazu ausgelegt ist, an der Herstellung von mindestens zwei Packungen (2; 2a, 2b, 2c; 2'a, 2'b) beteiligt zu sein, wobei jedes Paar benachbarter Werkzeuge (5; 5a, 5b, 5c; 5'a, 5'b, 5'c) zur gemeinsamen Herstellung einer Packung (2; 2a, 2b, 2c; 2'a, 2'b) ausgelegt ist.

2. Vorrichtung nach Anspruch 1, wobei die Werkzeuge (5; 5a, 5b, 5c; 5'a, 5'b, 5'c) dazu ausgelegt sind, Verbindungsabschnitte (10) zu erzeugen, die den Umriss geschlossener Packungen (2) bilden.

3. Vorrichtung nach einem der vorhergehenden Ansprüche, wobei die Werkzeuge (5a, 5b, 5c) abwechselnd Werkzeugprofile (13) einer ersten (13a) und einer zweiten Art (13b) stützen, wobei die erste Art (13a) an Werkzeugprofilen (13) bei Ineingriffnahme der Materialbahn (3) dazu ausgelegt ist, an der Herstellung von zwei benachbarten Packungen (2) beteiligt zu sein und einen ersten Abschnitt (16a) zum Erzeugen eines vorderen Teils des Verbindungsabschnitts (10) für eine Packung (2) und einen zweiten Abschnitt (16b) zum Erzeugen eines hinteren Teils des Verbindungsabschnitts (10) für die zweite Packung (2) umfasst, und wobei die zweite Art (13b) an Werkzeugprofilen (13) bei Ineingriffnahme der Materialbahn (3) dazu ausgelegt ist, an der Herstellung von drei benachbarten Packungen (2) beteiligt zu sein und einen ersten Abschnitt (17a) zum Erzeugen eines vorderen Teils des Verbindungsabschnitts (10) für eine erste der drei Packungen (2) und einen zweiten Zwischenabschnitt (17b) zum Erzeugen des gesamten Verbindungsabschnitts (10) für eine zweite der drei Packungen (2) sowie einen dritten Abschnitt (17c) zum Erzeugen eines hinteren Teils des Verbindungsabschnitts (10) für die dritte der drei Packungen (2) umfasst, wobei der erste Abschnitt (16a) eines Werkzeugs (5a) mit einem Werkzeugprofil (13) der ersten Art (13a) mit dem dritten Abschnitt (17c) eines benachbarten Werkzeugs (5b) mit einem Werkzeugprofil (13) der zweiten Art (13b) zusammenwirkt, um den gesamten Verbindungsabschnitt (10) für eine Packung (2a) zu erzeugen, und wobei der zweite Abschnitt (16b) eines Werkzeugs (5c) mit einem Werkzeugprofil (13) der ersten Art (13a) mit dem ersten Abschnitt (17a) eines benachbarten Werkzeugs (5b) mit einem Werkzeugprofil (13) der zweiten Art (13b) zusammenwirkt, um den gesamten Verbindungsabschnitt (10) für eine Packung (2c) zu erzeugen.

4. Vorrichtung nach Anspruch 3, wobei jedes Werkzeug (5a, 5b, 5c) eine Breite B1 aufweist, die einer Breite B2 der Packungen (2) entspricht, zu deren Erzeugung das Werkzeug (5) wie folgt ausgelegt ist: B1 = 1,5 * B2.

5. Vorrichtung nach Anspruch 1 oder 2, wobei die Werkzeuge (5'a, 5'b, 5'c) identische Werkzeugprofile (13) stützen, wobei die Werkzeugprofile (13) bei Ineingriffnahme der Materialbahn jeweils dazu ausgelegt sind, an der Erzeugung von zwei benachbarten Packungen (2) beteiligt zu sein und einen ersten Abschnitt (16'a) zum Erzeugen eines vorderen Teils des Verbindungsabschnitts (10) für eine erste der zwei Packungen (2) und einen zweiten Abschnitt (16'b) zum Erzeugen eines hinteren Teils des Verbindungsabschnitts (10) für eine zweite der zwei Packungen (2) umfasst, wobei der erste Abschnitt (16'a) des Werkzeugprofils (13) eines Werkzeugs (5'a) mit dem zweiten Abschnitt (16'b) des Werkzeugprofils (13) eines benachbarten Werkzeugs (5'b) zusammenwirkt, um den gesamten Verbindungsabschnitt (10) für eine Packung (2'a) zu erzeugen, und wobei der zweite Abschnitt (16'b) des Werkzeugprofils (13) eines Werkzeugs (5'c) mit dem ersten Abschnitt (16'a) des Werkzeugprofils eines benachbarten Werkzeugs (5'b) zusammenwirkt, um den gesamten Verbindungsabschnitt (10) für eine Packung (2'b) zu erzeugen.

6. Vorrichtung nach Anspruch 5, wobei jedes Werkzeug (5'a, 5'b, 5'c) eine Breite B1 aufweist, die einer Breite B2 der Packungen (2) entspricht, zu deren Erzeugung das Werkzeug wie folgt ausgelegt ist: B1 = B2.

7. Vorrichtung nach einem der vorhergehenden Ansprüche, die ferner ein Bodenversiegelungselement umfasst, das dazu ausgelegt ist, seitliche Querdichtungen (22) an einem unteren Teil des Verbindungsabschnitts (10) jeder Packung (2) zu erzeugen.

8. Vorrichtung nach einem der vorhergehenden Ansprüche, die ferner ein Oberseitenverschlusselement umfasst, das dazu ausgelegt ist, einen ergänzenden Oberseitenverschluss (27) an einem oberen Teil des Verbindungsabschnitts (10) jeder Packung (2) zu erzeugen.

9. Vorrichtung nach Anspruch 8, wobei das Oberseitenverschlusselement hier dazu ausgelegt sein kann, Oberseitenverschlüsse zu erzeugen, die eine Breite B4 aufweisen, die einer Breite B2 der Packungen (2) entspricht, zu deren Erzeugung die Vorrichtung wie folgt ausgelegt ist: B4 > 0,5 * B2.

## Revendications

1. Dispositif pour produire des emballages (2 ; 2a, 2b, 2c ; 2'a, 2'b) à partir d'une bande de matériau pliée en M (3), comprenant :

un porte-outils rotatif (4) supportant une pluralité d'outils (5 ; 5a, 5b, 5c ; 5'a, 5'b, 5'c) disposés de façon périphérique, lesquels outils (5 ; 5a, 5b, 5c ; 5'a, 5'b, 5'c) comprennent chacun un élément de base (6) et un élément de mise en prise (7) qui est étudié de manière à pouvoir pivoter par rapport à cet élément de base, et lesquels éléments de base (6) forment une surface extérieure circonférentielle (8) du porte-outils (4) par-dessus laquelle surface extérieure circonférentielle (8) on peut faire passer ladite bande de matériau (3), dans lequel le porte-outils (4) est étudié, lors de la rotation, pour déplacer les outils (5 ; 5a, 5b, 5c ; 5'a, 5'b, 5'c) le long d'un chemin de travail (WP) le long duquel les outils (5 ; 5a, 5b, 5c ; 5'a, 5'b, 5'c) peuvent être mis en prise avec la bande de matériau (3) par pliage dudit élément de mise en prise (7) pour la liaison de parties de paroi se faisant mutuellement face de la bande de matériau (3) le long de parties de liaison (10) qui délimitent lesdits emballages (2 ; 2a, 2b, 2c ; 2'a, 2'b), et un chemin de retour (RP) le long duquel les outils (5 ; 5a, 5b, 5c ; 5'a, 5'b, 5'c) peuvent être mis hors de prise d'avec la bande de matériau (3) par élévation dudit élément de mise en prise (7), et dans lequel chaque outil (5 ; 5a, 5b, 5c ; 5'a, 5'b, 5'c) est étudié pour être déplacé ensemble avec la bande de matériau (3) lorsque l'outil (5 ; 5a, 5b, 5c ; 5'a, 5'b, 5'c) est déplacé le long dudit chemin de travail (WP) **caractérisé en ce que** chaque outil (5 ; 5a, 5b, 5c ; 5'a, 5'b, 5'c), lors de la mise en prise avec ladite bande de matériau (3), est étudié de manière à participer à la production d'au moins deux emballages (2 ; 2a, 2b, 2c ; 2'a, 2'b), dans lequel chaque paire d'outils adjacents (5 ; 5a, 5b, 5c ; 5'a, 5'b, 5'c) est étudiée pour la production conjointe d'un emballage (2 ; 2a, 2b, 2c ; 2'a, 2'b).

2. Dispositif selon la revendication 1, dans lequel lesdits outils (5 ; 5a, 5b, 5c ; 5'a, 5'b, 5'c) sont étudiés pour procurer des parties de liaison (10) qui délimitent des emballages (2) fermés.

**3.** Dispositif selon l'une quelconque des revendications précédentes, dans lequel les outils (5a, 5b, 5c) supportent en alternance des profils d'outil (13) d'un premier (13a) et d'un deuxième type (13b), lequel premier type (13a) de profils d'outil (13), lorsqu'il se met en prise avec la bande de matériau (3), est étudié de manière à participer à la production de deux emballages (2) contigus et comprend une première section (16a) pour procurer une partie frontale de la partie de liaison (10) pour un emballage (2) et une deuxième section (16b) pour procurer une partie arrière de la partie de liaison (10) pour le deuxième emballage (2), et lequel deuxième type (13b) des profils d'outil (13), lorsqu'il se met en prise avec la bande de matériau (3), est étudié pour participer à la production de trois emballages (2) contigus et comprend une première section (17a) pour procurer une partie frontale de la partie de liaison (10) pour un premier desdits trois emballages (2) et une deuxième section intermédiaire (17b) pour procurer la partie de liaison entière (10) pour un deuxième desdits trois emballages (2), ainsi qu'une troisième section (17c) pour procurer une partie arrière de la partie de liaison (10) pour le troisième des trois emballages (2), dans lequel la première section (16a) d'un outil (5a) ayant un profil d'outil (13) dudit premier type (13a) coopère avec la troisième section (17c) d'un outil contigu (5b) ayant un profil d'outil (13) dudit deuxième type (13b) pour procurer la partie de liaison entière (10) pour un emballage (2a), et dans lequel la deuxième section (16b) d'un outil (5c) ayant un profil d'outil (13) dudit premier type (13a) coopère avec la première section (17a) d'un outil contigu (5b) ayant un profil d'outil (13) dudit deuxième type (13b) pour procurer la partie de liaison entière (10) pour un emballage (2c).

**4.** Dispositif selon la revendication 3, dans lequel chaque outil (5a, 5b, 5c) a une largeur B1 en rapport avec une largeur B2 des emballages (2), l'outil (5) étant étudié pour produire ceux-ci de la manière qui suit : B1 = 1,5*B2.

**5.** Dispositif selon la revendication 1 ou 2, dans lequel les outils (5'a, 5'b, 5'c) supportent des profils d'outil (13) identiques, lesquels profils d'outil (13), lorsqu'ils se mettent en prise avec la bande de matériau, sont étudiés chacun pour participer à la production de deux emballages contigus (2) et comprennent une première section (16'a) pour procurer une partie frontale de la partie de liaison (10) pour un premier desdits deux emballages (2), et une deuxième section (16'b) pour procurer une partie arrière de la partie de liaison (10) pour un deuxième desdits deux emballages (2), dans lequel la première section (16'a) du profil d'outil (13) d'un outil (5'a) coopère avec la deuxième section (16'b) du profil d'outil (13) d'un outil contigu (5'b) pour procurer la partie de liaison entière (10) pour un emballage (2'a), et dans lequel la deuxième section (16'b) du profil d'outil (13) d'un outil (5'c) coopère avec la première section (16'a) du profil d'outil d'un outil contigu (5'b) pour procurer la partie de liaison entière (10) pour un emballage (2'b).

**6.** Dispositif selon la revendication 5, dans lequel chaque outil (5'a, 5'b, 5'c) a une largeur B1 en rapport avec une largeur B2 des emballages (2), l'outil étant étudié pour produire ceux-ci de la manière qui suit : B1 = B2.

**7.** Dispositif selon l'une quelconque des revendications précédentes, comprenant en outre un élément d'étanchéification inférieur qui est étudié de manière à procurer des joints d'étanchéité transversaux latéraux (22) dans une partie inférieure de la partie de liaison (10) de chaque emballage (2).

**8.** Dispositif selon l'une quelconque des revendications précédentes, comprenant en outre un élément de fermeture supérieur qui est étudié pour procurer une fermeture supérieure (27) complémentaire dans une partie supérieure de la partie de liaison (10) de chaque emballage (2).

**9.** Dispositif selon la revendication 8, dans lequel l'élément de fermeture supérieur peut être étudié ici de manière à procurer des fermetures supérieures ayant une largeur B4 en rapport avec une largeur B2 des emballages (2), le dispositif étant étudié pour produire ceux-ci de la manière qui suit : B4 > 0,5*B2.

Fig. 1

Fig. 2

Fig. 3

Fig. 4

Fig. 5

*Fig. 6a*

*Fig. 6b*

*Fig. 7a*

*Fig. 7b*

EP 2 485 890 B1

*Fig. 8*

Fig. 9

*Fig.10a*

*Fig. 10b*

*Fig. 10c*

EP 2 485 890 B1

*Fig. 11*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9941155 A

- WO 2005092601 A